# EUROPEAN PATENT APPLICATION

(11) **EP 4 549 144 A1**
(43) Date of publication of application: **07.05.2025**
(21) Application number: 24200928.0
(22) Date of filing: 17.09.2024
(51) Int. Cl.: B32B 7/023, B32B 3/30, B32B 27/18, B32B 27/30, B32B 27/36, E01F 8/00, E04B 1/86, G02B 1/111

(54) **SOUNDPROOF PANEL HAVING ANTI-GLARE FUNCTION**

(30) Priority: 03.11.2023 KR 20230150422
(71) Applicant: Idel Co., Ltd., Gyeongsangbuk-do 39912 (KR)
(72) Inventor: LEE, Jae Sik, 41463 Buk-gu, Daegu (KR); NAM, Ki Sung, 28326 Cheongwon-gu, Cheongju-si (KR); CHOI, Yong Hyeok, 46249 Geumjeong-gu, Busan (KR)
(74) Representative: Müller-Boré & Partner Patentanwälte PartG mbB

(57) **Abstract**

Provided is a soundproof panel having an anti-glare function, the soundproof panel including a base layer and anti-glare protrusions integrally formed on a surface of the base layer by a co-extrusion method, wherein the base layer contains polycarbonate or polymethyl methacrylate, and the anti-glare protrusions contain anti-glare particles having a particle diameter in the range of 10 to 40 µm.

## Description

### BACKGROUND OF THE DISCLOSURE

### 1. Field of the Disclosure

The present disclosure relates to a soundproof panel having an anti-glare function and, more particularly, to a soundproof panel capable of being used to prevent roadside noise, residential noise, or the like.

### 2. Description of the Related Art

Light pollution refers to the presence of excessive light resulting from the inappropriate use of illumination or light leaking outside the intended illuminated area that disrupts the healthy and comfortable life of each individual or harms the environment. Light pollution resulting not only from artificial illumination but also from sunlight causes damage. For example, there has been a case where sunlight reflecting off the glass windows of skyscrapers causes damage. Sunlight reflecting off the glass windows of skyscrapers causes glare, obstructing the view of nearby residents and pedestrians. To solve such problems, methods to attach films to glass windows or apply coatings on glass surfaces have been designed.

As one example of attaching a film to a glass window to reduce light reflection from the glass, Korean Patent No. 10-1994490 (published on 28 June 2019) discloses an article including a glazing substrate and a reflective polarizing film article attached to the glazing substrate, wherein the reflective polarizing film article includes a reflective polarizing film and a reflection inhibitor layer, reduces the transmittance of light polarized along a horizontal polarization cut-off axis, and reduces the horizontally polarized light to 90% or less of a horizontally polarized incident visible light.

Furthermore, as one example of applying a coating on a glass surface to reduce a light reflection effect from the glass, Korean Patent No. 10-2500410 (published on 17 February 2023) discloses a coated glass article. The coated glass article includes a glass substrate and a coating deposited on the glass substrate, wherein the coating includes: i. a first inorganic metal oxide layer deposited on the main surface of the glass substrate (in which case the first inorganic metal oxide layer has a refractive index of 1.8 or more); and ii. a second inorganic metal oxide layer deposited on the first inorganic metal oxide layer (in which case the second inorganic metal oxide layer has a refractive index of 1.6 or less), and the coated glass article exhibits a total visible light reflectance of 6.5% or less.

However, technologies involving attaching films to glass surfaces or applying coatings on glass surfaces are problematic because such films and coatings are detached when glass is exposed to the outside for long periods. This means that durability is poor, and detached films and coatings are required to be restored, which is inconvenient.

In the meantime, noise barriers refer to structures installed on roadsides, in residential areas, or the like to prevent traffic noise.

Soundproof panels constituting noise barriers are usually made of transparent materials in consideration of the aesthetics of roadsides, residential areas, and the like. However, these soundproof panels generate light reflection, causing glare to motorists and residents, which is problematic.

### [Document of related art]

Korean Patent No. 10-1994490 (published on 28 June 2019)
Korean Patent No. 10-2500410 (published on 17 February 2023)

### SUMMARY OF THE INVENTION

The present disclosure aims to provide a soundproof panel that is transparent, has a soundproofing function, and is capable of preventing glare by reflecting incident light through diffuse reflection.

One embodiment of the present disclosure provides a soundproof panel having an anti-glare function, the soundproof panel including a base layer and anti-glare protrusions integrally formed on a surface of the base layer by a co-extrusion method, wherein the base layer contains polycarbonate or polymethyl methacrylate, and the anti-glare protrusions contain anti-glare particles having a particle diameter in the range of 10 to 40 µm.

In addition, the base layer may have a thickness in the range of 6 to 20 mm.

In addition, the anti-glare protrusions may protrude from the surface of the base layer in an average height range of 10 to 200 um.

In addition, a longitudinal section of the anti-glare protrusion may have one or more shapes selected from the group consisting of conical, semicircular, or semielliptical shapes.

In addition, the anti-glare protrusions may contain polycarbonate or polymethyl methacrylate.

In addition, the anti-glare protrusions may further contain an ultraviolet (UV) stabilizer.

In addition, the anti-glare particles may be polycarbonate beads or polymethyl methacrylate beads.

In addition, the anti-glare particles may be contained in an amount range of 10% to 60% by volume based on 100% by volume of the anti-glare protrusions.

In addition, the anti-glare particles may be contained such that a portion of each anti-glare particle protrudes from the surface of the anti-glare protrusion.

In addition, the protruding portion of each anti-glare particle accounts for 0% to 30% of an average particle diameter of the anti-glare particles.

A soundproof panel having an anti-glare function, according to the present disclosure, is transparent, has a soundproofing function, and can prevent glare by reflecting incident light through diffuse reflection.

In addition, the soundproof panel having the anti-glare function can be manufactured by a co-extrusion method of the present disclosure, making the process simple, and can be used for long periods without replacement due to a base layer and anti-glare protrusions integrally formed.

Furthermore, the anti-glare protrusions contain anti-glare particles and thus can help the anti-glare effect to be further improved.

Moreover, even when the anti-glare protrusions are worn out by the external environment, the anti-glare effect can be maintained for long periods without deterioration by the anti-glare particles contained in the protrusions.

### BRIEF DESCRIPTION OF THE DRAWINGS

FIG. 1 is a cross-sectional view of a soundproof panel having an anti-glare function according to one embodiment of the present disclosure;
FIG. 2 is a cross-sectional view of anti-glare protrusions according to one embodiment of the present disclosure;
FIG. 3 is a cross-sectional view of anti-glare protrusions according to another embodiment of the present disclosure; and
FIGS. 4A to 4E show analysis results of anti-glare effects with varying particle diameters of beads.

### DESCRIPTION OF THE PREFERRED EMBODIMENTS

Hereinbelow, embodiments of the present disclosure will be described in detail with reference to the attached drawings so that those skilled in the art can easily implement the present disclosure. However, the present disclosure may be implemented in many different forms and is not limited to the embodiments described herein. Throughout the specification, like reference numerals are used to identify like elements.

Existing noise barriers are primarily built with a soundproof panel 100 made of a transparent material formed of synthetic resins. However, such a transparent soundproof panel 100 reflects incident light and causes glare to motorists or residents, which has been problematic. Therefore, the inventors of the present disclosure have developed a soundproof panel 100 that is transparent, has a soundproofing function, and is capable of preventing glare by reflecting incident light through diffuse reflection.

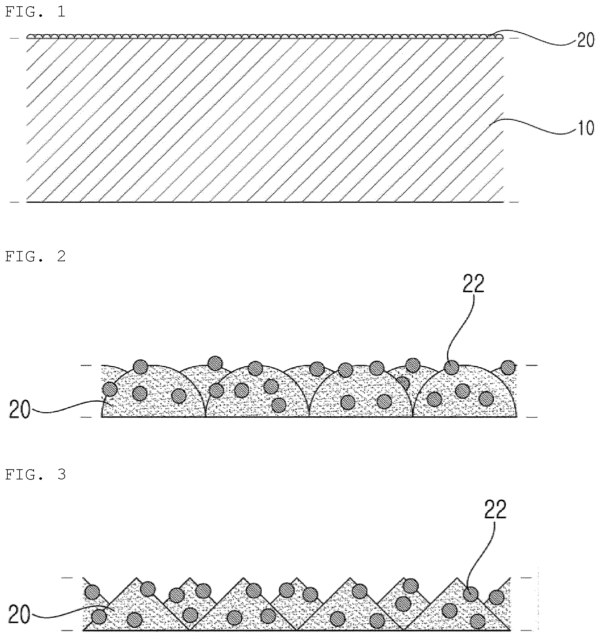

FIG. 1 shows a cross-sectional view of a soundproof panel 100 having an anti-glare function according to one embodiment of the present disclosure.

As shown in FIG. 1, one embodiment of the present disclosure provides the soundproof panel 100 having the anti-glare function (hereinafter referred to as the soundproof panel 100) . The soundproof panel 100 includes a base layer 10 and anti-glare protrusions 20 integrally formed on a surface of the base layer 10 by a co-extrusion method, wherein the base layer 10 contains polycarbonate or polymethyl methacrylate, and the anti-glare protrusions 20 contain anti-glare particles 22 having a particle diameter in the range of 10 to 40 um.

The soundproof panel 100 may exhibit a glossiness in the range of 15 to 52 GU, specifically, 20 to 45 GU, and more specifically, 30 to 40 GU, in response to a light incident at an angle in the range of 20° to 85°.

The soundproof panel 100 primarily includes the base layer 10 and the anti-glare protrusions 20 formed on the surface of the base layer 10, and the base layer 10 and the anti-glare protrusions 20 are integrally formed by the co-extrusion method.

Despite not being limited in type as long as any transparent synthetic resin with excellent durability for preventing damage or deformation from external impact is used, the base layer 10 may specifically be made of polycarbonate or polymethyl methacrylate, and those with inherent diffuse reflection effects may exhibit much better effects.

For example, polycarbonate and polymethyl methacrylate, which are thermoplastics, are advantageous in terms of excellent durability and weather resistance. In addition, there is another advantage in that polycarbonate and polymethyl methacrylate are colorless and transparent, so when the soundproof panel 100 is made of polycarbonate or polymethyl methacrylate, the aesthetics of the surrounding environment are not impaired by the soundproof panel 100.

The base layer 10 formed may have a thickness in the range of 6 to 20 mm, specifically, 6 to 15 mm, and more specifically, 6 to 12 mm.

When the thickness of the base layer 10 is smaller than 6 mm, the soundproof panel 100 may be out of shape or deformed. On the contrary, when the thickness of the base layer 10 exceeds 20 mm, the workability during noise barrier installation may be poor, the manufacturing costs are increased, and the soundproofing and anti-glare effects for the thickness fail to meet expectations.

The soundproof panel 100 includes the anti-glare protrusions 20 protruding from the surface of the base layer 10.

The anti-glare protrusions 20 may protrude from the surface of the base layer 10 in a height range of 10 to 200 um, specifically, 50 to 150 µm, and more specifically, 80 to 120 µm.

When the height of the anti-glare protrusions 20 is less than 10 µm, the anti-glare effect may fail to be exhibited. On the contrary, when the height of the anti-glare protrusions 20 exceeds 200 µm, the amount of the anti-glare particles 22, which will be described below, increases, resulting in increased manufacturing costs.

The anti-glare protrusions 20 perform an anti-glare role by reflecting the light incident on the soundproof panel 100 through diffuse reflection.

The longitudinal section of the anti-glare protrusion 20 may have one shape selected from the group consisting of conical, semicircular, or semielliptical shapes and may specifically have a conical shape. In addition, the protrusions may be irregularly or regularly arranged but are preferably formed irregularly to improve the diffuse reflection effect.

The anti-glare protrusions 20 are configured such that the light incident on the soundproof panel 100 is kept from hitting the soundproof panel 100 and being reflected, so a material with higher transmittance may result in a better effect. In addition, the anti-glare protrusions 20 used may have a relatively excellent formability as a plurality thereof is formed on the surface of the base layer 10.

In other words, despite not being limited in type as long as the material thereof has excellent transparency and formability, the anti-glare protrusions 20 may specifically be made of one or more selected from the group consisting of polyethylene, polyvinyl chloride, polyvinyl alcohol, polystyrene, polycarbonate, and polymethyl methacrylate. More specifically, polycarbonate or polymethyl methacrylate is used.

The diffuse reflection effect of the soundproof panel 100 may be further improved when the base layer 10 and the anti-glare protrusions 20 have similar light refractive indices or are made of similar materials.

For example, when the base layer 10 is formed of polycarbonate, the anti-glare protrusions 20 may be formed of polycarbonate, and when the base layer 10 is formed of polymethyl methacrylate, the anti-glare protrusions 20 may be formed of polymethyl methacrylate.

The anti-glare protrusions 20 may further contain a UV stabilizer, and the UV stabilizer performs the role of blocking or reducing the absorption of ultraviolet light to the base layer 10 or the anti-glare protrusions 20. In other words, the UV stabilizer acts to prevent degradation or yellowing of the base layer 10 or the anti-glare protrusions 20 in response to light.

Examples of such UV stabilizers used may include UV absorbers to absorb ultraviolet light and convert the absorbed ultraviolet light into heat energy, quenchers to absorb the energy of chromophores and release the absorbed energy as heat energy, hindered amine light stabilizers (HALS) to terminate free radical reactions during degradation reactions caused by ultraviolet light, and the like. Among these, HALS-based UV stabilizers that have excellent surface protection effects and are applicable to articles with small thicknesses may be used. In addition, such HALS-based UV stabilizers do not deteriorate the properties of polycarbonate or polymethyl methacrylate, which is advantageous.

The anti-glare protrusions 20 may contain the anti-glare particles 22, and the anti-glare particles 22 may be dispersed in the anti-glare protrusions 20 to improve the diffuse reflection effect for light to a maximum level, thereby preventing glare.

The anti-glare particles 22 may have a particle diameter in the range of 10 to 40 um, specifically, 15 to 25 µm, and more specifically, 20 um.

When the particle diameter of the anti-glare particles 22 is smaller than 2 um, the light reaching the soundproof panel 100 is highly likely to pass the anti-glare particles 22 through, so the diffuse reflection effect may fail to be exhibited at a maximum level, which is problematic. On the contrary, when the particle diameter of the anti-glare particles 22 exceeds 40 µm, there is a problem with poor heat resistance, and the light reflected from the anti-glare particles 22 may be reflected again to other anti-glare particles 22, thus weakening the diffuse reflection effect.

When the particle diameter of the anti-glare particles 22 falls within the above numerical range, the soundproof panel 100 may exhibit a glossiness in the range of 15 to 52 GU in response to the light incident at an angle in the range of 20° to 85°.

The anti-glare particles 22 may be contained inside the anti-glare protrusions 20, or a portion of each anti-glare particle 22 may protrude from the surface of the anti-glare protrusion 20. The more the surface of the anti-glare particle 22 protrudes from the surface of the anti-glare protrusion 20, the better the diffuse reflection effect, thereby preventing glare caused by reflected light.

The protruding portion of each anti-glare particle 22 may account for 0% to 30% of the average particle diameter of the anti-glare particles 22, which may specifically account for 10% to 30% and more specifically account for 15% to 30%. When the protruding portion exceeds 30% of the average particle diameter, there is a problem with the anti-glare particles 22 being easily detached, so the above numerical range is desirable.

In other words, the more the anti-glare particles 22 protrude by using the soundproof panel 100 for long periods and wearing the anti-glare protrusions 20 out, the better the diffuse reflection for light, or the more likely the diffuse reflection of light remains at an initial level.

To effectively improve the diffuse reflection effect for light to a maximum level by mixing the anti-glare particles 22 in the anti-glare protrusions 20, beads having similar refractive indices to those of the anti-glare protrusions 20 may be used for the anti-glare particles 22. Specifically, polystyrene beads or polymethyl methacrylate beads may be used. For example, when the anti-glare protrusions 20 are formed of polycarbonate, polystyrene beads may be used for the anti-glare particles 22, and when the anti-glare protrusions 20 are formed of polymethyl methacrylate, polymethyl methacrylate beads may be used for the anti-glare particles 22.

The anti-glare particles 22 may account for 10% to 60% by volume, specifically, 20% to 50% by volume, and more specifically, 30% to 40% by volume, based on 100% by volume of the anti-glare protrusions 20.

When the amount of the anti-glare particles 22 is less than 10% by volume, the diffuse reflection effect fails to be exhibited at a maximum level because the amount of the anti-glare particles 22 protruding from the anti-glare protrusions 20 is small. On the contrary, when the amount of the anti-glare particles 22 exceeds 60% by volume, not only the anti-glare particles 22 fail to be completely dispersed during the manufacturing process of the final soundproof panel 100, but also the anti-glare protrusions 20 fail to be formed with ease, resulting in a problem with poor workability.

Another embodiment of the present disclosure provides a method of manufacturing a soundproof panel 100 having an anti-glare function.

The method of manufacturing the soundproof panel 100 having the anti-glare function will be briefly described.

First, materials constituting a base layer 10 and anti-glare protrusions 20 are prepared. Subsequently, anti-glare particles 22 are mixed in the material constituting the anti-glare protrusions 20 to prepare a mixture. A UV stabilizer may be further contained as a material of an anti-glare layer. The materials constituting the base layer 10 and the anti-glare protrusions 20 are separately put into different extruders and melted. The molten materials are extruded through co-extrusion to integrally form the anti-glare protrusions 20 on a surface of the base layer 10. The base layer 10 and the anti-glare protrusions 20 are integrally formed, so the anti-glare protrusions 20 are kept from being easily detached compared to existing films or coatings. Thus, there are advantages in that durability is good, and frequent replacement is unnecessary.

As described above, the anti-glare protrusions 20 extruded through co-extrusion are formed on the surface of the base layer 10 through a roll press process. The roll press process is performed by passing the anti-glare protrusions 20 through a roll formed to be identical in shape to the anti-glare protrusions 20 so that the anti-glare protrusions 20 are in contact therewith. The roll may be formed of metal or rubber.

Hereinbelow, the present disclosure will be described in more detail using examples. These examples are only for illustrating the present disclosure in more detail, and it is apparent to those skilled in the art that the scope of the present disclosure is not limited thereto.

### <Example>

### Example 1

First, a mixture for manufacturing protrusions was prepared such that 30% by volume of polystyrene beads having a particle diameter of 20 µm were contained based on 100% by volume of a polycarbonate resin.

The prepared mixture for manufacturing protrusions and a polycarbonate (for preparing a base layer) resin were put into different inlets of a co-extruder, melted, and then extruded through co-extrusion, thereby preparing a sheet having a form in which a preliminary layer for preparing anti-glare protrusions was formed on a surface of the base layer.

Finally, the preliminary layer for preparing the anti-glare protrusions was pressed into a roll to form the anti-glare protrusions, thereby manufacturing a soundproof panel.

In this case, the temperature of an extruder cylinder was in the range of about 275°C to 285°C, the temperature of a T-die was in the range of about 260°C to 273°C, the speed of a cooling roll was about 3.6 rpm, and the speed of a drawing roll was about 5.5 rpm.

### Example 2

A soundproof panel was manufactured in the same manner as in Example 1, except for involving 10% by volume of the polystyrene beads based on 100% by volume of the polycarbonate resin.

### Example 3

A soundproof panel was manufactured in the same manner as in Example 1, except for involving 60% by volume of the polystyrene beads based on 100% by volume of the polycarbonate resin.

### Example 4

A soundproof panel was manufactured in the same manner as in Example 1, except for involving the polystyrene beads having a particle diameter of 10 pm.

### Example 5

A soundproof panel was manufactured in the same manner as in Example 1, except for involving the polystyrene beads having a particle diameter of 30 pm.

### Example 6

A soundproof panel was manufactured in the same manner as in Example 1, except for involving the polystyrene beads having a particle diameter of 40 pm.

### <Comparative Examples>

### Comparative Example 1

A soundproof panel was manufactured in the same manner as in Example 1, except for involving 5% by volume of the polystyrene beads based on 100% by volume of the polycarbonate resin.

### Comparative Example 2

A soundproof panel was manufactured in the same manner as in Example 1, except for involving 70% by volume of the polystyrene beads based on 100% by volume of the polycarbonate resin.

### Comparative Example 3

A soundproof panel was manufactured in the same manner as in Example 1, except for involving the polystyrene beads having a particle diameter of 5 um.

### Comparative Example 4

A soundproof panel was manufactured in the same manner as in Example 1, except for involving the polystyrene beads having a particle diameter of 50 µm.

### <Test Examples>

### Test Example 1: Analysis of anti-glare effects with varying particle diameters of beads

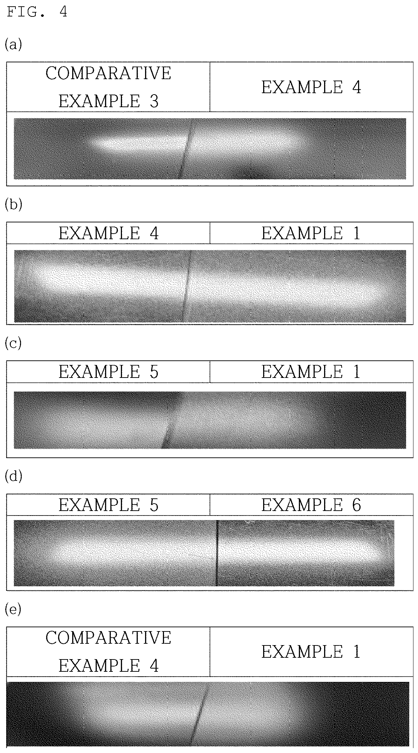

The diffuse reflection effects with varying particle diameters of the beads were analyzed. The results thereof are shown in FIG. 4.

From FIG. 4, it is confirmed that the diffuse reflection effect is not improved as the particle diameter of the beads increases. In the case of Comparative Example 4, involving the beads having a particle diameter of 40 µm, there was a problem in thermal resistance, causing a defect that resulted in yellowing.

It is confirmed that compared to Comparative Examples 3 and 4, Examples 1, 4, 5, and 6, involving the beads having particle diameters in the range of 10 to 40 µm, have excellent diffuse reflective effects. Especially in the case of Example 1, involving the beads having a particle diameter of 20 um, the diffuse reflective effect is confirmed to be the best.

In summary, it is confirmed that the soundproof panel having the anti-glare function, according to the present disclosure, contains beads with a predetermined size and thus may improve the anti-glare effect to a maximum level.

### Test Example 2: Analysis of glossiness

The glossiness of the soundproof panels manufactured according to the examples or comparative examples was analyzed.

Glossiness analysis method: Samples were prepared using the soundproof panels manufactured according to the examples and comparative examples, and lights were incident on the surface of each sample at angles of 20°, 60°, and 85° to analyze the amount of the incident light being specularly reflected.

The glossiness was tested and measured by the Korea Testing & Research Institute, an accredited testing laboratory, according to KS M ISO 2813. The results thereof are shown in Table 1 below.

**[Table 1]**

| Classification | Glossiness (at 20°) | Glossiness (at 60°) | Glossiness (at 85°) |
|---|---|---|---|
| Example 1 | 14 GU | 36 GU | 32 GU |
| Example 4 | 18 GU | 52 GU | 50 GU |
| Example 5 | 20 GU | 45 GU | 40 GU |
| Example 6 | 15 GU | 46 GU | 44 GU |
| Comparative Example 1 | 29 GU | 52 GU | 55 GU |
| Comparative Example 4 | 12 GU | 38 GU | 39 GU |

As a result of comparing the glossiness of the examples and comparative examples, it is confirmed from Table 1 that Comparative Example 4, involving larger-size beads, exhibits excellent glossiness. However, in the case of Comparative Example 4, it was confirmed that there was a problem with discoloration of the soundproof panel due to incident light.

On the other hand, it was confirmed that compared to Comparative Example 1, Examples 1, 3, 5, and 6 exhibited excellent glossiness at all angles. It is confirmed through the above results that the glossiness is excellent when the soundproof panel contains a predetermined particle size.

### Test Example 3: Anti-glare effects with varying amounts of beads

The anti-glare effects with varying amounts of the beads in the soundproof panels, manufactured according to Examples 1 to 3 and Comparative Examples 1 and 2, were analyzed. The results thereof are shown in Table 2.

The analysis method is as follows: Light was incident on each soundproof panel manufactured at an angle of 60°, and then the anti-glare effects (diffuse reflection) were analyzed as excellent, good, moderate, or poor.

**[Table 2]**

| Classification | Anti-glare effect |
|---|---|
| Example 1 | Excellent |
| Example 2 | Good |
| Example 3 | Good |
| Comparative Example 1 | Poor |
| Comparative Example 2 | Moderate |

From Table 2, the anti-glare effects are confirmed to be better in Examples 1 to 3 than in Comparative Examples 1 and 2. Specifically, in the case of Comparative Example 1, in which the amount of the beads was small, the anti-glare effect was poorly exhibited. In the case of Comparative Example 2, in which the amount of the beads was high, the anti-glare effect was measured as moderate, which is presumed that the diffuse reflection effect deteriorates because the amount of the beads is excessively high. On the other hand, it is confirmed that Examples 1 to 3 exhibit good anti-glare effects. Especially in the case of Example 1, the diffuse reflection effect was confirmed to be excellent.

## Claims

1. A soundproof panel having an anti-glare function, the soundproof panel comprising:
a base layer; and
anti-glare protrusions integrally formed on a surface of the base layer by a co-extrusion method,
wherein the base layer comprises polycarbonate or polymethyl methacrylate, and
the anti-glare protrusions comprise anti-glare particles having a particle diameter in a range of 10 to 40 pm.

2. The soundproof panel of claim 1, wherein the base layer has a thickness in a range of 6 to 20 mm.

3. The soundproof panel of claim 1 or 2, wherein the anti-glare protrusions protrude from the surface of the base layer in an average height range of 10 to 200 pm.

4. The soundproof panel of any one of claims 1 to 3, wherein a longitudinal section of the anti-glare protrusion has one or more shapes selected from the group consisting of conical, semicircular, or semielliptical shapes.

5. The soundproof panel of any one of claims 1 to 4, wherein the anti-glare protrusions comprise polycarbonate or polymethyl methacrylate.

6. The soundproof panel of claim 5, wherein the anti-glare protrusions further comprise an ultraviolet (UV) stabilizer.

7. The soundproof panel of any one claims 1 to 6, wherein the anti-glare particles are polystyrene beads or polymethyl methacrylate beads.

8. The soundproof panel of any one of claims 1 to 7, wherein the anti-glare particles are comprised in an amount range of 10% to 60% by volume based on 100% by volume of the anti-glare protrusions.

9. The soundproof panel of any one of claims 1 to 8, wherein the anti-glare particles are comprised such that a portion of each anti-glare particle protrudes from the surface of the anti-glare protrusion.

10. The soundproof panel of claim 9, wherein the protruding portion of each anti-glare particle accounts for 0% to 30% of an average particle diameter of the anti-glare particles.
